# EUROPEAN PATENT APPLICATION

(11) **EP 2 497 790 A1**
(43) Date of publication of application: **12.09.2012**
(21) Application number: 10846107.0
(22) Date of filing: 18.02.2010
(51) Int. Cl.: C08F 283/01

(54) **POLYESTER (METH)ACRYLATE RESIN COMPOSITION, COATED STRUCTURE, AND METHOD FOR CONSTRUCTING SAME**

(71) Applicant: DIC Corporation, Tokyo 174-8520 (JP)
(72) Inventor: TAKIKAWA Yuko, Takaishi-shi Osaka 592-0001 (JP); MATSUMOTO Takashi, Takaishi-shi Osaka 592-0001 (JP)
(74) Representative: Albrecht, Thomas
(86) International application number: PCT/JP2010/052428
(87) International publication number: WO 2011/101968

(57) **Abstract**

The present invention provides a polyester (meth)acrylate resin composition that is excellent in terms of compatibility with dicyclopentenyloxyethyl (meth)acrylate (B) and that has a suitability for spraying that means the composition is suitable for use in a spraying method in the field of civil engineering and construction and the like, a coated structure produced by coating the same, and a method for constructing the same by using, as an acid component of the polyester structure of a polyester (meth)acrylate resin (A), an alicyclic dibasic acid (A1) and/or an aliphatic dibasic acid (A2) in an amount of 40% by mole or more.

## Description

### Technical Field

The present invention relates to a polyester (meth)acrylate resin composition that is used in a spraying method in the field of civil engineering and construction and that is excellent in terms of compatibility and suitability for spraying, a coated structure, and a method for constructing the same.

### Background Art

In the civil engineering and construction industry, such as road paving, in order to shorten the construction period and improve the odor during construction work, the use of low-odor resins that are cured by a radical polymerization reaction, such as unsaturated polyester resins and vinyl ester resins, has been increasing. In particular, when construction work is performed on a road or the like by a spraying method, the improvement in odor is urgently demanded. Thus, the demand for low-odor resin compositions has been increasing.

In order to improve the odor of existing resin compositions containing a low-boiling point reactive monomer, such as styrene, it is effective to introduce a high-boiling point monomer. Accordingly, a polyester (meth)acrylate resin composition containing an alicyclic high-boiling point reactive monomer (dicyclopentenyloxyethyl methacrylate) is known (Patent Document 1).

In this resin composition containing dicyclopentenyloxyethyl methacrylate, the odor can be markedly improved. However, existing polyester (meth)acrylate resins and dicyclopentenyloxyethyl methacrylate are not easily compatible with each other. As a result, the resin composition has a poor suitability for spraying and causes a problem of a decrease in physical properties.

[Patent Document 1] Japanese Unexamined Patent Application Publication No. 2005-154688

### Disclosure of Invention

### Problems to be Solved by the Invention

An object of the present invention is to provide a polyester (meth)acrylate resin composition that is excellent in terms of compatibility with dicyclopentenyloxyethyl methacrylate and that has a suitability for spraying that means the composition is suitable for use in a spraying method in the field of civil engineering and construction and the like, a coated structure produced by coating the same, and a method for constructing the same.

### Means for Solving the Problems

As a result of intensive studies on the relationship between the structure of polyester (meth)acrylate resins and dicyclopentenyloxyethyl methacrylate, the inventors of the present invention have found that the problem of the compatibility and the suitability for spraying can be solved by using a specific polyester (meth)acrylate resin structure, and completed the present invention.

Specifically, the present invention provides a polyester (meth)acrylate resin composition containing a polyester (meth)acrylate resin (A) and dicyclopentenyloxyethyl (meth)acrylate (B), wherein the polyester (meth)acrylate resin (A) is obtained by using, as an acid component of the polyester structure thereof, an alicyclic dibasic acid (A1) and/or an aliphatic dibasic acid (A2) in an amount of 40% by mole or more, a coated structure produced by coating the same, and a method for constructing the same.

### Advantages

According to the present invention, in a polyester (meth)acrylate resin composition containing dicyclopentenyloxyethyl (meth)acrylate (B), by using, as an acid component of the polyester structure thereof, an alicyclic dibasic acid (A1) and/or an aliphatic dibasic acid (A2) in an amount of 40% by mole or more, it is possible to obtain a polyester (meth)acrylate resin composition that is excellent in terms of compatibility and suitability for spraying. Therefore, it is possible to provide a coated structure obtained by using a coating material for spraying, the coating material containing the resin composition, and a construction method using a spray device including the composition, for which the workability is good.

### Best Modes for Carrying Out the Invention

A polyester (meth)acrylate resin (A) used in the present invention is a saturated polyester or unsaturated polyester resin having two or more (meth)acryloyl groups per molecule at the ends thereof, and also includes an air-drying polyester (meth)acrylate resin obtained by using an air-drying-property-imparting group-containing compound. A raw material of the polyester (meth)acrylate resin is obtained by a polycondensation reaction of a saturated dibasic acid and/or unsaturated dibasic acid and a polyhydric alcohol, and if necessary, an air-drying-property-imparting group-containing compound. The unsaturated polyester resin is obtained by a polycondensation reaction between a saturated dibasic acid containing an α,β-unsaturated dibasic acid and a polyhydric alcohol. In this case, as an acid component of the polyester structure, an alicyclic dibasic acid (A1) and/or an aliphatic dibasic acid (A2) is used in an amount of 40% by mole or more, preferably 50% to 100% by mole, and as another acid component, an aromatic dibasic acid is used in an amount of 60% by mole or less, preferably 50% by mole or less. Resins in which the alicyclic dibasic acid (A1) and/or the aliphatic dibasic acid (A2) is used as the acid component in an amount of less than 40% by mole are poor in terms of compatibility with dicyclopentenyloxyethyl methacrylate and suitability for spraying. When the alicyclic dibasic acid (A1) and the aliphatic dibasic acid (A2) are mixed, the mass ratio thereof is preferably 90 to 10:10 to 90 (parts by mass). Furthermore, the number-average molecular weight of the polyester (meth)acrylate resin (A) measured by gel permeation chromatography on the polystyrene equivalent basis is preferably 500 to 3,000, and preferably 500 to 2,000.

As for the production method, the polyester (meth)acrylate resin is obtained by allowing a compound having a (meth)acryloyl group and a functional group that reacts with a functional group (a hydroxyl group or a carboxyl group) located at an end of a saturated or unsaturated polyester to react with the functional group of the saturated or unsaturated polyester. Examples of the compound to be allowed to react with the functional group include various types of unsaturated monobasic acid and glycidyl esters thereof, such as glycidyl (meth)acrylate, acrylic acid, and methacrylic acid. Among these, glycidyl (meth)acrylate is preferable, and glycidyl methacrylate is particularly preferable.

Examples of the alicyclic dibasic acid (A1) which is the saturated dibasic acid include hexahydrophthalic acid, hexahydrophthalic anhydride, hexahydroterephthalic acid, and hexahydroisophthalic acid. Examples of the aliphatic dibasic acid (A2) include oxalic acid, succinic acid, malonic acid, glutaric acid, adipic acid, sebacic acid, and 1,12-dodecanedioic acid.

Examples of the unsaturated dibasic acid include maleic acid, maleic anhydride, fumaric acid, itaconic acid, and itaconic anhydride, and dialkyl esters thereof can also be used. This unsaturated dibasic acid also has a function of improving the compatibility similarly to the alicyclic dibasic acid (A1) and/or the aliphatic dibasic acid (A2).
The unsaturated dibasic acid can be used as one component of the alicyclic dibasic acid (A1) and/or the aliphatic dibasic acid (A2), which is used in an amount of 40% to 100% by mole, by being incorporated in an amount of preferably 1% to 30% by mole in the 40% to 100% by mole.

Examples of the aromatic dibasic acid used as the other acid component include phthalic acid, phthalic anhydride, halogenated phthalic anhydride, isophthalic acid, and terephthalic acid.

The polyhydric alcohol is preferably an aliphatic or alicyclic alcohol having two hydroxyl groups. Examples thereof include ethylene glycol, diethylene glycol, triethylene glycol, polyethylene glycol, propylene glycol, dipropylene glycol, tripropylene glycol, polypropylene glycol, 2-methyl-1,3-propanediol, 1,3-butanediol, neopentyl glycol, hydrogenated bisphenol A, 1,4-butanediol, 1,6-hexanediol, 1,2,3,4-tetrahydroxybutane, glycerol, trimethylolpropane, 1,3-propanediol, 1,2-cyclohexane glycol, 1,3-cyclohexane glycol, 1,4-cyclohexane glycol, 1,4-cyclohexanedimethanol, para-xylene glycol, bicyclohexyl-4,4'-diol, 2,6-decalin glycol, and 2,7-decalin glycol.

Examples of the air-drying-property-imparting group-containing compound include (1) as a carboxylic acid, a compound containing a cyclic unsaturated aliphatic polybasic acid and a derivative thereof and having active hydrogen; (2) as a polyhydric alcohol, an allyl ether group-containing compound having active hydrogen; (3) as a polyhydric alcohol, an alcoholysis compound obtained by a transesterification reaction between a polyhydric alcohol and a fatty oil such as a drying oil having active hydrogen; and (4) as a polyhydric alcohol, a dicyclopentadienyl group-containing compound having active hydrogen.

The compound (A3) containing a cyclic aliphatic unsaturated polybasic acid and a derivative thereof and having active hydrogen mentioned in (1) above is a compound having the structure represented by formula 1 below, and this structure has two active hydrogen atoms as shown in formula 1. Examples thereof include tetrahydrophthalic anhydride, endomethylenetetrahydrophthalic anhydride, methyltetrahydrophthalic anhydride, α-terpinene-maleic anhydride adduct, and trans-piperylene-maleic anhydride adduct. The compound (A3) containing a cyclic aliphatic unsaturated polybasic acid and a derivative thereof has a function of improving the compatibility with the dicyclopentenyloxyethyl methacrylate (B) similarly to the alicyclic dibasic acid (A1) and/or the aliphatic dibasic acid (A2). Therefore, when the compound (A3) is used in combination as one component of 40% to 100% by mole of the alicyclic dibasic acid (A1) and/or the aliphatic dibasic acid (A2), the compound (A3) can be incorporated preferably in an amount of 1% to 40% by mole in the 40% to 100% by mole.

Examples of the allyl ether group-containing compound mentioned in (2) above include allyl ether compounds of polyhydric alcohols, such as ethylene glycol monoallyl ether, diethylene glycol monoallyl ether, triethylene glycol monoallyl ether, polyethylene glycol monoallyl ether, propylene glycol monoallyl ether, dipropylene glycol monoallyl ether, tripropylene glycol monoallyl ether, polypropylene glycol monoallyl ether, 1,2-butylene glycol monoallyl ether, 1,3-butylene glycol monoallyl ether, trimethylolpropane monoallyl ether, trimethylolpropane diallyl ether, glycerol monoallyl ether, glycerol diallyl ether, pentaerythritol monoallyl ether, pentaerythritol diallyl ether, and pentaerythritol triallyl ether; and allyl ether compounds having an oxirane ring, such as allyl glycidyl ether.

The drying oil having active hydrogen mentioned in (3) above is preferably fat and oil having an iodine value of 130 or more. Examples thereof include linseed oil, soybean oil, cottonseed oil, peanut oil, and coconut oil. Examples of the polyhydric alcohol used for the alcoholysis compound obtained by a transesterification reaction include trivalent alcohols such as glycerol, trimethylolethane, trimethylolpropane, and trishydroxymethylaminomethane; and tetravalent alcohols such as pentaerythritol.

An example of the dicyclopentadienyl group-containing compound having active hydrogen mentioned in (4) above is hydroxylated dicyclopentadiene having a dicyclopentenyl group.

In order to introduce an air-drying-property-imparting group into a polyester resin using the air drying compound described above, a urethane-forming reaction described below can be used besides an esterification reaction. This introduction method using a urethane-forming reaction is an effective method when low-temperature flexibility or the like is to be imparted to resin-cured products.

The polyester (meth)acrylate resin (A) of the present invention may be mixed and used in combination with epoxy (meth)acrylates, urethane (meth)acrylates, other polyester (meth)acrylates, and the like so long as the advantages of the present invention are not impaired.

The dicyclopentenyloxyethyl (meth)acrylate (B) of the present invention is dicyclopentenyloxyethyl acrylate or dicyclopentenyloxyethyl methacrylate, but from the standpoint of safety in outdoor spraying construction work, dicyclopentenyloxyethyl methacrylate is preferably used. The dicyclopentenyloxyethyl (meth)acrylate (B) is used as a mixture of 40% to 70% by mass of the (B) and 30% to 60% by mass of the polyester (meth)acrylate resin (A). However, a reactive monomer having an unsaturated group or another (meth)acryloyl group-containing monomer may be used in combination with the 40% to 70% by mass of the dicyclopentenyloxyethyl (meth)acrylate (B) so long as the advantages of the present invention are not impaired. Examples of the (meth)acryloyl group-containing monomer include methyl acrylate, ethyl acrylate, n-butyl acrylate, isobutyl acrylate, t-butyl acrylate, 2-ethylhexyl acrylate, n-octyl acrylate, decyl acrylate, lauryl acrylate, stearyl acrylate, polycaprolactone acrylate, diethylene glycol monomethyl ether monoacrylate, dipropylene glycol monomethyl ether monoacrylate, 2-ethylhexylcarbitol acrylate, methyl methacrylate, ethyl methacrylate, n-butyl methacrylate, isobutyl methacrylate, t-butyl methacrylate, hexyl methacrylate, 2-ethylhexyl methacrylate, n-octyl methacrylate, decyl methacrylate, lauryl methacrylate, stearyl methacrylate, polycaprolactone methacrylate, diethylene glycol monomethyl ether monomethacrylate, dipropylene glycol monomethyl ether monomethacrylate, 2-ethylhexylcarbitol methacrylate, phenoxyethyl acrylate, phenol ethylene oxide (EO)-modified acrylate, nonylphenylcarbitol acrylate, nonylphenol EO-modified acrylate, phenoxypropyl acrylate, phenol propylene oxide (PO)-modified acrylate, nonylphenoxypropyl acrylate, nonylphenol PO-modified acrylate, acryloyloxyethyl phthalate, phenoxyethyl methacrylate, phenol EO-modified methacrylate, nonylphenylcarbitol methacrylate, nonylphenol EO-modified methacrylate, phenoxypropyl methacrylate, phenol PO-modified methacrylate, nonylphenoxypropyl methacrylate, nonylphenol PO-modified methacrylate, methacryloyloxyethyl phthalate, dicyclopentenyloxyethyl (meth)acrylate, and 2-hydroxyethyl (meth)acrylate. Among these, phenoxyethyl (meth)acrylate and dicyclopentenyloxyethyl (meth)acrylate, which have a molecular weight of 180 or more and which have a property of not being easily volatilized, and 2-hydroxyethyl (meth)acrylate which has a hydrogen bond and which has a property of not being easily volatized are preferable because even if a slight amount of such a compound remains in a coating film in an unreacted state, it does not easily form total volatile organic compounds (TVOC). Examples of the reactive monomer having an unsaturated group include styrene, vinyl acetate, vinyl toluene, and α-methyl toluene.

In addition, a monomer having at least two ethylenically unsaturated groups per molecule may be used in combination with the dicyclopentenyloxyethyl (meth)acrylate (B) so long as the advantages of the present invention are not impaired. By using such a monomer in combination, abrasion resistance, scratch resistance, agitation resistance, chemical resistance, and the like of the surfaces of cured products can be improved. Examples of the compound having at least two ethylenically unsaturated groups per molecule include alkanediol di(meth)acrylates such as ethylene glycol di(meth)acrylate, 1,2-propylene glycol di(meth)acrylate, 1,3-butylene glycol di(meth)acrylate, and 1,6-hexanediol di(meth)acrylate; and polyoxyalkylene-glycol di(meth)acrylates such as dipropylene glycol di(meth)acrylate, triethylene glycol di(meth)acrylate, tetraethylene glycol di(meth)acrylate, and polyethylene glycol di(meth)acrylate. These may be used alone or in combination of two or more. Furthermore, divinylbenzene, diallyl phthalate, diallyl isophthalate, diallyl tetrabromophthalate, triallyl phthalate, and the like may also be used so long as the advantages of the present invention are not impaired.

The resin composition of the present invention may contain a curing accelerator. Examples of the curing accelerator include metal soaps. Examples thereof include cobalt soaps such as cobalt naphthenate and cobalt octylate; zinc octylate, vanadium octylate, copper naphthenate, and barium naphthenate.
When a cobalt soap is used, it is preferable to add an oxime compound thereto. An examples of the oxime compound added is methyl ethyl ketone oxime, and the amount of oxime compound added is 0.01 parts by mass or more and less than 1 part by mass, preferably 0.02 to 0.8 parts by mass relative to 100 parts by mass of the resin composition containing the (A) and (B). When the amount is out of this range, long-term storage stability is not obtained. The mass ratio of the cobalt soap to the oxime compound is preferably 1:0.01 to 1:1, more preferably 1:0.08 to 1:0.75. When the mass ratio is out of this range, long-term storage stability is not obtained.

A curing accelerator other than metal soaps may also be added so long as the advantages of the present invention are not impaired. Examples thereof include metal chelates such as vanadium acetylacetate, cobalt acetylacetate, and iron acetylacetonate; aniline; N,N-substituted anilines such as N,N-dimethylaniline, N,N-diethylaniline, p-toluidine, N,N-dimethyl-p-toluidine, N,N-bis(2-hydroxyethyl)-p-toluidine, 4-(N,N-dimethylamino)benzaldehyde, 4-[N,N-bis(2-hydroxyethyl)amino]benzaldehyde, 4-(N-methyl-N-hydroxyethyl amino)benzaldehyde, N,N-bis(2-hydroxypropyl)-p-toluidine, N-ethyl-m-toluidine, triethanolamine, m-toluidine, diethylenetriamine, pyridine, phenylmorpholine, piperidine, N,N-bis(hydroxyethyl)aniline, and diethanolaniline; and amines such as N,N-substituted-p-toluidine and 4-(N,N-substituted amino)benzaldehyde. Among these, amines and metal soaps are preferable. These curing accelerators may be used alone or in combination of two or more. The curing accelerator may be added to the resin composition in advance or added to the resin composition at the time of use. The amount of curing accelerator used is 0.1 to 5 parts by mass.

In order to adjust the curing rate, a radical curing agent, a photo-radical initiator, or a polymerization inhibitor may be used in the resin composition of the present invention.

Examples of the radical curing agent include organic peroxides. Specific examples thereof include publicly known organic peroxides such as diacyl peroxides, peroxy esters, hydroperoxides, dialkyl peroxides, ketone peroxides, peroxy ketals, alkyl peresters, and percarbonates.
The amount of radical curing agent used is preferably 0.1 to 6 parts by mass relative to 100 parts by mass of the total amount of the resin composition.

Examples of the photo-radical initiator, i.e., photosensitizer include benzoin ethers such as benzoin alkyl ethers; benzophenones such as benzophenone, benzil, and methyl orthobenzoyl benzoate; acetophenones such as benzyl dimethyl ketal, 2,2-diethoxyacetophenone, 2-hydroxy-2-methylpropiophenone, 4-isopropyl-2-hydroxy-2-methylpropiophenone, and 1,1-dichloroacetophenone; and thioxanthones such as 2-chlorothioxanthone, 2-methylthioxanthone, and 2-isopropylthioxanthone.

Furthermore, as a component that assists drying of a coating film, petroleum wax, synthetic wax, i.e., polyethylene wax, oxidized paraffin, alcohol-type wax, or the like may be added to the resin composition of the present invention.

Examples of the polymerization inhibitor include trihydrobenzene, toluhydroquinone, 14-naphthoquinone, para-benzoquinone, hydroquinone, benzoquinone, hydroquinone monomethyl ether, p-tert-butylcatechol, and 2,6-di-tert-butyl-4-methylphenol. Preferably, the polymerization inhibitor can be added to the resin composition in an amount of 10 to 1,000 ppm.

In the resin composition of the present invention, in addition to the above components, various additives such as pigments, heat-shielding pigments, fillers, ultraviolet absorbers, thickeners, low-shrinking agents, antioxidants, plasticizers, aggregates, flame retardants, stabilizers, and reinforcing materials may be used.

The pigment may be any pigment that is used in preparation of color coating materials. Typical examples thereof include organic pigments such as carbon black, Phthalocyanine Blue, Phthalocyanine Green, and Quinacridone Red; extender pigments such as titanium oxide, iron oxide, Titanium Yellow, and Copper Chromium Black; and inorganic flaky pigments such as aluminum flakes, and pearl mica.

By adding the heat-shielding pigment to the resin composition of the present invention, the resin composition can be preferably used as a heat-shielding coating material for spraying. As for this heat-shielding pigment, a pigment having a solar reflectance in the wavelength range of 350 to 2,100 nm of 15% or more, the solar reflectance being defined in JIS A 5759, and having an L* value in the CIE1976L*a*b* color space of 30 or less and more preferably 24 or less may be added for the purpose of obtaining a heat-shielding property. Furthermore, it is also preferable to use a color pigment having a solar reflectance in the wavelength range of 350 to 2,100 nm of 12% or more, the solar reflectance being defined in JIS A 5759, and, if necessary, a white pigment in combination. Examples of color pigments that satisfy this condition include yellow pigments such as monoazo yellow (trade name: Hostaperm Yellow H3G, manufactured by Hoechst AG), red pigments such as iron oxide (trade name: Toda Color 120ED, manufactured by Toda Kogyo Corp.) and Quinacridone Red (trade name: Hostaperm Red E2B70, manufactured by Hoechst AG), blue pigments such as Phthalocyanine Blue (trade name: Cyanine Blue SPG-8, manufactured by DIC Corporation), and green pigments such as Phthalocyanine Green (trade name: Cyanine Green 5310, manufactured by Dainichiseika Color and Chemicals Mfg. Co., Ltd.).

Examples of the filler include hydraulic silicate materials (cement), a calcium carbonate powder, clay, an alumina powder, a silica stone powder, talc, barium sulfate, a silica powder, glass powder, glass beads, mica, aluminum hydroxide, celluloses, silica sand, river sand, and crystalline limestone.

The resin composition of the present invention can be preferably used in a spraying method because the resin composition is excellent in terms of compatibility and suitability for spraying. Objects to be coated are not limited to civil engineering and construction structures, and the resin composition of the present invention can be sprayed onto any object. In such a case, examples of the civil engineering and construction structures include floors, walls, ceilings, columns, roads, bridge piers, pavements, pool floors, and rooftop floors, all of which are composed of concrete, asphalt, metal, or the like; and such structures having a resin layer or the like thereon.

In a spraying construction method of the present invention, as for a spray condition, the pressure (fluid pressure) with a spray gun is 5 to 16 MPa, and preferably 7 to 12 MPa considering a spray pattern and scattering of the coating material. The viscosity of the resin composition corresponding to this condition is preferably 0.5 to 10 dPs·s, and particularly preferably 0.5 to 5 dPa·s because when the viscosity is more than 5 and 10 dPa·s or less, a special spraying device is necessary. A viscosity of the resin composition in the range of 0.5 to 5 dPa·s is particularly preferable because when a coating material is prepared by adding other additives such as a pigment and a heat-shielding pigment, the coating operation thereof can be satisfactorily performed using a standard spray device.

### EXAMPLES

The present invention will be described in more detail by way of Examples. In the description below, "parts" and "%" represent "parts by mass" and "% by mass", respectively.

### Synthesis Example 1 [Synthesis of polyester (meth)acrylate resin]

In a four-necked flask equipped with a thermometer, a stirrer, an inert gas inlet, and a reflux condenser, 3 moles of adipic acid and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (A) was obtained.

### Synthesis Example 2 [Synthesis of polyester (meth)acrylate resin]

In a four-necked flask equipped with a thermometer, a stirrer, an inert gas inlet, and a reflux condenser, 1.2 moles of adipic acid, 1.8 moles of phthalic anhydride, and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (B) was obtained.

### Synthesis Example 3 [Synthesis of polyester (meth)acrylate resin]

In a four-necked flask equipped with a thermometer, a stirrer, an inert gas inlet, and a reflux condenser, 2 moles of adipic acid, 1 mole of hexahydrophthalic anhydride, and 2 moles of neopentyl glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (C) was obtained.

### Synthesis Example 4 [Synthesis of polyester (meth)acrylate resin]

In a four-necked flask equipped with a thermometer, a stirrer, an inert gas inlet, and a reflux condenser, 2 moles of adipic acid, 1 mole of methyltetrahydrophthalic anhydride, and 2 moles of neopentyl glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (D) was obtained.

### Examples 1 to 4 [Compatibility test]

The compatibility test described below was conducted using the polyester methacrylate resins (A) to (D) obtained in Synthesis Examples 1 to 4, respectively.

### (Method of compatibility test)

Each of the polyester methacrylate resins (A) to (D) is mixed with dicyclopentenyloxyethyl methacrylate under heating at 60°C at a mixing ratio of 60/40, 50/50, or 40/60. Subsequently, each of the mixtures is cooled to a room temperature of 25°C, and the presence or absence of turbidity is confirmed by visual observation.

### (Method of measuring viscosity)

The viscosity of each of the polyester methacrylate resin compositions was measured at normal temperature (25°C) in accordance with JIS K 6901-5.5 with a BM-type rotary viscometer (manufactured by Toki Sangyo Co., Ltd.).

**[Table 1]**

| | Example 1 | | | Example 2 | Example 3 | | Example 4 | |
|---|---|---|---|---|---|---|---|---|
| A | 60 | 50 | 40 | | | | | |
| B | | | | 40 | | | | |
| C | | | | | 50 | 40 | | |
| D | | | | | | | 50 | 40 |
| Monomer | 40 | 50 | 60 | 60 | 50 | 60 | 50 | 60 |
| Compatibility | Good | Good | Good | Good | Good | Good | Good | Good |
| Viscosity [dPa·s] | 4.9 | 2.8 | 1.6 | 3.4 | 4.5 | 2.3 | 4.0 | 2.1 |
| Suitability for spraying | ⊙ | ⊙ | ⊙ | ⊙ | ⊙ | ⊙ | ⊙ | ⊙ |

### Monomer: Dicyclopentenyloxyethyl methacrylate

### [Compatibility]

Good: Sample confirmed as being clear by visual observation at 25°C.
Poor: Sample confirmed as being cloudy by visual observation at 25°C.

### [Suitability for spraying (Appropriate viscosity 0.5 to 5 dPa·s)]

⊙: 0.5 dPa·s or more and 5.0 dPa·s or less
Δ: More than 5 dPa·s and 10 dPa·s or less
x: More than 10 dPa·s

### Comparative Synthesis Example 1 [Synthesis of polyester (meth)acrylate resin]

In a four-necked flask equipped with a thermometer, a stirrer, an inert gas inlet, and a reflux condenser, 0.9 moles of adipic acid, 2.1 moles of phthalic anhydride, and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (a) was obtained.

### Comparative Synthesis Example 2 [Synthesis of polyester (meth)acrylate resin]

In a four-necked flask equipped with a thermometer, a stirrer, an inert gas inlet, and a reflux condenser, 0.6 moles of adipic acid, 2.4 moles of phthalic anhydride, and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (b) was obtained.

### Comparative Synthesis Example 3 [Synthesis of polyester (meth)acrylate resin]

In a four-necked flask equipped with a thermometer, a stirrer, an inert gas inlet, and a reflux condenser, 0.3 moles of adipic acid, 2.7 moles of phthalic anhydride, and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (c) was obtained.

### Comparative Synthesis Example 4 [Synthesis of polyester (meth)acrylate resin]

In a four-necked flask equipped with a thermometer, a stirrer, an inert gas inlet, and a reflux condenser, 3 moles of phthalic anhydride and 2 moles of diethylene glycol were put, and 0.5% by weight of monobutyltin oxide was added as an esterification catalyst thereto. The reaction mixture was allowed to react at 205°C for 11 hours. Subsequently, the reaction mixture was cooled to 140°C, 2 moles of glycidyl methacrylate was then put therein, and the resulting mixture was allowed to react for 10 hours. Thus, a polyester methacrylate resin (d) was obtained.

**[Table 2]**

| | Comparative Example 1 | | | Comparative Example 2 | | | Comparative Example 3 | | | Comparative Example 4 | | |
|---|---|---|---|---|---|---|---|---|---|---|---|---|
| a | 60 | 50 | 40 | | | | | | | | | |
| b | | | | 60 | 50 | 40 | | | | | | |
| c | | | | | | | 60 | 50 | 40 | | | |
| d | | | | | | | | | | 60 | 50 | 40 |
| Monomer | 40 | 50 | 60 | 40 | 50 | 60 | 40 | 50 | 60 | 40 | 50 | 60 |
| Compatibility | Good | Good | Poor | Good | Good | Poor | Good | Good | Poor | Poor | Poor | Poor |
| Viscosity [dPa·s] | 18.2 | 8.1 | - | 18.4 | 8.5 | - | 33.8 | 12.3 | - | - | - | - |
| Suitability for spraying | × | Δ | × | × | Δ | × | × | × | × | × | × | × |

| | | | | | | | | | | | | |
|---|---|---|---|---|---|---|---|---|---|---|---|---|
| Monomer: Dicyclopentenyloxyethyl methacrylate | | | | | | | | | | | | |

### [Compatibility]

Good: Sample confirmed as being clear by visual observation at 25°C.
Poor: Sample confirmed as being cloudy by visual observation at 25°C.

### [Suitability for spraying (Appropriate viscosity 0.5 to 5 dPa·s)]

⊙: 0.5 dPa·s or more and 5.0 dPa·s or less
Δ: More than 5 dPa·s and 10 dPa·s or less
x: More than 10 dPa·s

In Comparative Examples 1 to 4, in the test where the polyester methacrylate resin and dicyclopentenyloxyethyl methacrylate are mixed at a mixing ratio of 60 to 40/40 to 60, they are compatible with each other at a mixing ratio of 50/50. However, since the amount of alicyclic dibasic acid (A1) and/or aliphatic dibasic acid (A2) is less than 40% by mole, the viscosity is higher than 5 dPa·s, and thus the suitability for spraying is poor. In addition, it is found that when the mixing ratio (resin/monomer) is 40/60, the polyester methacrylate resin and dicyclopentenyloxyethyl methacrylate are not compatible with each other.

### Example 5 (Heat-shielding top coat)

Heat-shielding pigments and the resin D of Synthesis Example 4 were blended so as to have the composition shown in Table 3 to obtain a heat-shielding gray coating material. This coating material and a radical curing agent were mixed in a spray coating device. The mixture was sprayed onto a core specimen (φ 10 × 5 cm or φ 10 × 10 cm) prepared by cutting out from a piece of asphalt paving such that the amount of the mixture was 400 to 600 g/m², and cured and dried at normal temperature for 30 to 60 minutes. A surface temperature of this specimen was measured in accordance with Tokyo Metropolitan Government Bureau of Construction, Road Maintenance Division "Syanetsusei hosou (syadou) sekkei/sekou youryou (The design and construction instruction of a heat-shielding pavement (roadway))", Appended Table 1 "Syanetsusei hosou no shitsunai syousya ni yoru romen teigen ondo no sokutei houhou (The method for measuring a decrease in the temperature of a road surface by indoor irradiation of a heat-shielding pavement)". The results are shown in Table 4.

**[Table 3]**

| | Example 5 |
|---|---|
| Resin D (Synthesis Example 4) | 43.9 |
| Monomer (Dicyclopentenyloxyethyl methacrylate) | 43.9 |
| Daipyroxide Brown 9290 (Dainichiseika Color and Chemicals Mfg. Co., Ltd.) | 5.0 |
| Hostaperm Yellow H3G (Hoechst AG) | 6.0 |
| Cyanine Blue SPG-8 (DIC Corporation) | 0.1 |
| Reolosil QS-20L (Tokuyama Corporation) | 1.1 |
| Total | 100.0 |

Daipyroxide Brown 9290 (Brown pigment, manufactured by Dainichiseika Color and Chemicals Mfg. Co., Ltd.)
Hostaperm Yellow H3G (Yellow pigment, manufactured by Hoechst AG)
Cyanine Blue SPG-8 (Blue pigment, manufactured by DIC Corporation)
Reolosil QS-20L (thixotropic agent, manufactured by Tokuyama Corporation)

**[Table 4]**

| | Example 5 | Comparative Example (Core specimen)* |
|---|---|---|
| N=1 | 48.4°C | 60.2°C |
| N=2 | 49.4°C | 60.0°C |
| N=3 | 48.6°C | 59.7°C |
| Average | 48.8°C | 60.0°C |
| Decrease in temperature of road surface | 11.2°C | - |

| | | |
|---|---|---|
| *Core specimen prepared by cutting out from current road: DIC Corporation Sakai Plant, Pavement in coating experimental laboratory | | |

As shown in Table 4, the surface temperature of the specimens onto which the heat-shielding coating material of the present invention was applied was 48.8°C on average, whereas the surface temperature of the specimens of Comparative Example, which had no coating thereon, was 60°C, which was higher than by 11.2°C.

## Claims

1. A polyester (meth)acrylate resin composition comprising a polyester (meth)acrylate resin (A); and dicyclopentenyloxyethyl (meth)acrylate (B),
wherein the polyester (meth)acrylate resin (A) is obtained by using, as an acid component of the polyester structure thereof, an alicyclic dibasic acid (A1) and/or an aliphatic dibasic acid (A2) in an amount of 40% by mole or more.

2. The polyester (meth)acrylate resin composition according to Claim 1, wherein the polyester (meth)acrylate resin (A) is obtained by a reaction between glycidyl (meth)acrylate and a polyester polyol obtained from a polyhydric alcohol and the alicyclic dibasic acid (A1) and/or the aliphatic dibasic acid (A2) which is the acid component of 40% to 100% by mole.

3. The polyester (meth)acrylate resin composition according to Claim 1, wherein the polyhydric alcohol is an aliphatic or alicyclic alcohol compound having two hydroxyl groups.

4. The polyester (meth)acrylate resin composition according to Claim 1, wherein the amount of the polyester (meth)acrylate resin (A) is 60% to 30% by mass, and the amount of the dicyclopentenyloxyethyl (meth)acrylate (B) is 40% to 70% by mass.

5. The polyester (meth)acrylate resin composition according to Claim 1, wherein the viscosity of the resin composition is 0.5 to 5 dPa·s.

6. The polyester (meth)acrylate resin composition according to Claim 1, wherein the resin composition is used in spray coating.

7. The polyester (meth)acrylate resin composition according to Claim 1, wherein a mixing mass ratio of the alicyclic dibasic acid (A1) to the aliphatic dibasic acid (A2) of the polyester (meth)acrylate resin (A) is in the range of 90 to 10:10 to 90 (parts by mass).

8. A coated structure produced by spray-coating the polyester (meth)acrylate resin composition according to any one of Claims 1 to 3.

9. A construction method comprising spraying the polyester (meth)acrylate resin composition according to any one of Claims 1 to 3 onto a civil engineering and construction structure.
